# EUROPÄISCHE PATENTSCHRIFT

(11) **EP 2 227 589 B1**
(45) Veröffentlichungstag und Bekanntmachung des Hinweises auf die Patenterteilung: **31.12.2014**
(21) Anmeldenummer: 08861209.8
(22) Anmeldetag: 30.10.2008
(51) Int. Cl.: D21B 1/32, D21F 1/70

(54) **VERFAHREN ZUR ENTFERNUNG VON STÖRSTOFFEN AUS EINER WÄSSRIGEN PAPIERFASERSUSPENSION MIT HILFE MINDESTENS EINER FLOTATIONSANLAGE**
METHOD FOR REMOVING UNWANTED MATTER FROM AN AQUEOUS PAPER FIBER SUSPENSION USING AT LEAST ONE FLOTATION INSTALLATION
PROCÉDÉ D'ÉLIMINATION DE SUBSTANCES GÊNANTES CONTENUES DANS UNE SUSPENSION DE FIBRES PAPETIÈRES AQUEUSE À L'AIDE D'AU MOINS UNE INSTALLATION DE FLOTTATION

(30) Priorität: 17.12.2007 DE 102007060736
(43) Veröffentlichungstag der Anmeldung: 15.09.2010
(73) Patentinhaber: Voith Patent GmbH, 89522 Heidenheim (DE)
(72) Erfinder: MANNES, Wolfgang, 88213 Ravensburg-Bavendorf (DE); BRITZ, Herbert, 88276 Berg (DE); SCHWEISS, Peter, 88275 Elchingen (DE)
(86) Internationale Anmeldenummer: PCT/EP2008/009146
(87) Internationale Veröffentlichungsnummer: WO 2009/077035

(56) Entgegenhaltungen:
- EP-A- 1 350 887
- EP-A- 1 388 370

## Beschreibung

Die Erfindung betrifft ein Verfahren zur Entfernung von Störstoffen aus einer wässrigen Papierfasersuspension gemäß dem Oberbegriff des Anspruchs 1, wie z.B. aus

EP 1 350 887 A2 bekannt.

Durch Flotation wird ein die auszuscheidenden Stoffe enthaltender Schaum oder Schwimmschlamm gebildet. Ein typischer Anwendungsfall für solche Verfahren ist die Aufbereitung von einer aus bedrucktem Altpapier gewonnenen Suspension, in der die Druckfarbenpartikel bereits von Fasern abgelöst sind, so dass sie sich ausflotieren lassen. Der hier beschriebene Flotationsvorgang nutzt die Unterschiede zwischen Papierfaserstoff und unerwünschten Störstoffteilchen in der Art, dass der Faserstoff auf Grund seines eher hydrophilen Charakters in der Fasersuspension verbleibt, während die angesprochenen Störstoffteilchen hydrophob sind und deshalb zusammen mit den Luftblasen in den Schaum gelangen. Weil dabei nicht alle Feststoffe ausflotiert, sondern Fasern von Verunreinigungen getrennt werden, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet. Solche Stoffe sind insbesondere Kleber, feine Kunststoffpartikel und eventuell auch Harze.

Da der Flotationsschaum, der bei einer einzigen Flotationsstufe gebildet wird, in den meisten Fällen noch einen beträchtlichen Anteil von Papierfasern enthält, wird das Verfahren oft mit mindestens zwei Flotationsstufen durchgeführt, wobei der Überlauf, also der Flotationsschaum, der ersten Stufe als Einlauf in die zweite Stufe gelangt. Üblicherweise spricht man dann von einer ersten und zweiten Flotationsstufe oder auch von Primär- und Sekundärflotation. Flotationsschaum fällt in einer Form an, in der er mit den üblichen Stoffpumpen nicht weitergeführt werden kann.

Der Erfindung liegt die Aufgabe zu Grunde, das Verfahren so zu gestalten, dass der Aufwand, insbesondere für die Schaumbehandlung, reduziert wird.

Diese Aufgabe wird durch die im Kennzeichen des Anspruchs 1 beschriebenen Merkmale gelöst.

Die Erfindung und ihre Vorteile werden erläutert an Hand von Zeichnungen. Dabei zeigen:
- Fig. 1: eine Flotationszelle mit angebauter Entgasungsvorrichtung;
- Fig. 2: Schnitt-Darstellung einer für das erfindungsgemäße Verfahren mit Vorteil verwendbaren Entgasungsvorrichtung;
- Fig. 3: ein Anlagenschema mit einer vorteilhaften Ausgestaltung des Verfahrens.

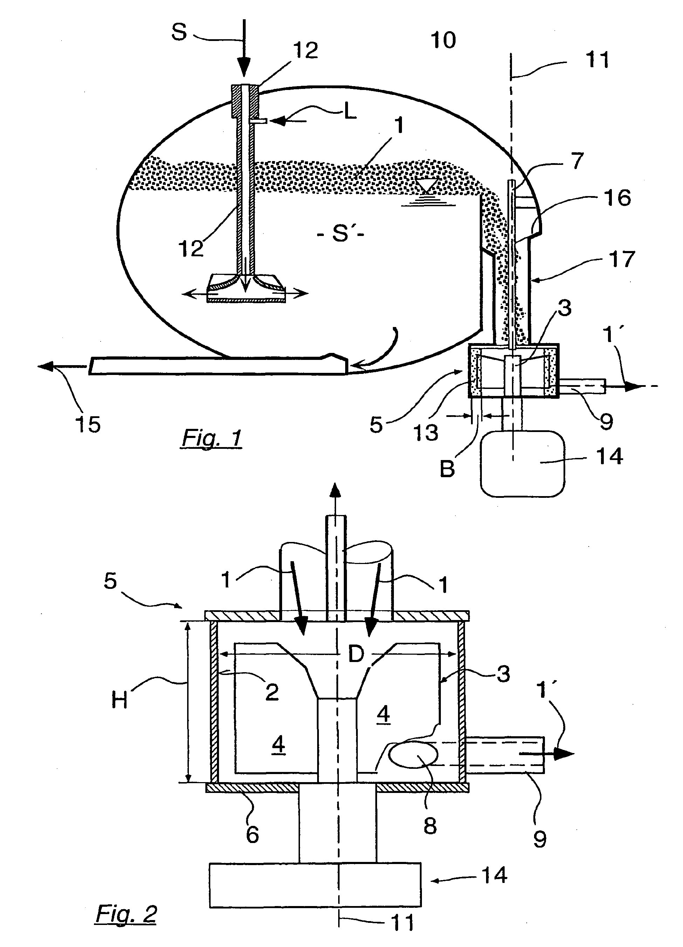

Zur Erläuterung des erfindungsgemäßen Verfahrens zeigt Fig. 1 in seitlicher geschnittener Ansicht eine Flotationsvorrichtung 10 für eine Altpapiersuspension. Diese enthält einen im Wesentlichen geschlossenen Behälter, der von oben durch eine Mischvorrichtung 12 mit der zu flotierenden papierfaserhaltigen Suspension S versorgt wird. In an sich bekannter Weise wird die Suspension S mit Luft L zu einer belüfteten Suspension S' vermischt, aus der innerhalb der Flotationsvorrichtung 10 die faserfremden, hydrophoben Bestandteile, wie z.B. Farbpartikel und klebende Teilchen (stickies) in den Flotationsschaum 1 aufsteigen. Der Gutstoff 15, der am Boden der Flotationsvorrichtung 10 abgezogen wird, enthält den überwiegenden Teil der Papierfasern und des Wassers.

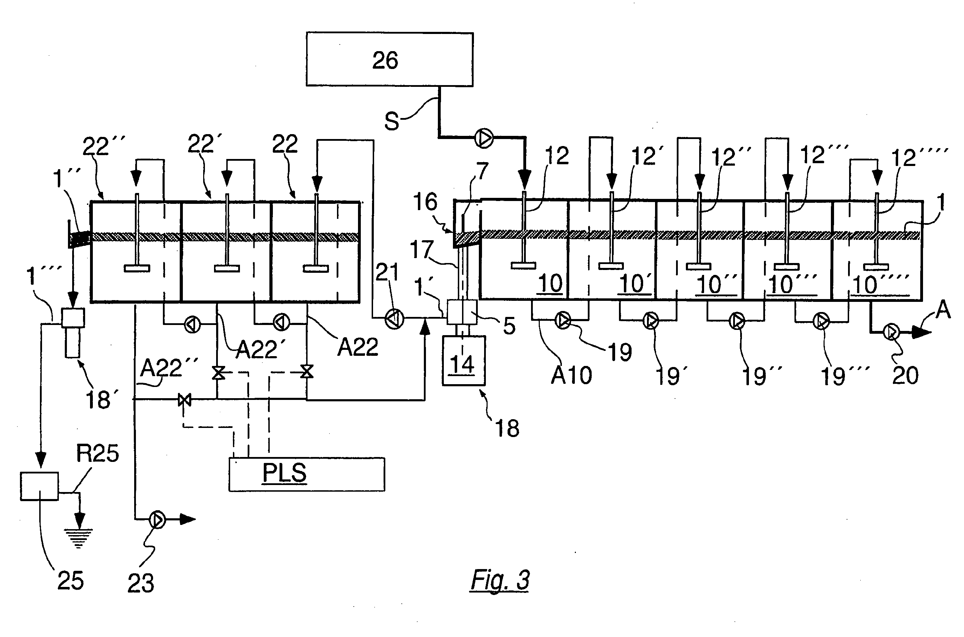

Der Flotationsschaum 1 fließt in die Schaumsammelrinne 16 ab (in der er sich bis zu zwei Minuten befinden kann) und von dieser durch ein Fallrohr 17 in eine Kammer 5, in der er sich als rotierender Flüssigkeitsring 13 an die Innenwand 2 anlegt. Dadurch wird der im Allgemeinen schmierige stark lufthaltige Flotationsschaum 1 zumindest teilweise entgast. Aus dem Flüssigkeitsring 13 heraus wird der teilweise entgaste Flotationsschaum 1' abgezogen. Dazu befindet sich eine Abzugsöffnung 8 in der Innenwand 2 (s. Fig. 2), die mit einem Abzugsstutzen 9 verbunden ist. Der teilweise entgaste Flotationsschaum 1' kann dann in einer Kreiselpumpe 21 (Fig. 3) weiter transportiert werden.

In vielen Fällen wird der Gutstoff erneut einer weiteren Flotationsvorrichtung zugeführt, so lange, bis die Reinigung so weit erfolgt ist, dass der Gutstoff weiterverarbeitet werden kann. Oft werden verschiedene Teile der Flotationsvorrichtung als Zellen ausgebildet, die von der Suspension nacheinander durchströmt werden. Wenn solche Zellen nebeneinander angeordnet sind, können sie eine gemeinsame Schaumsammelrinne 16 haben, in die der Flotationsschaum 1 abfließt, gesammelt und dann durch ein Fallrohr 17 zur Kammer 5 geführt wird.

In Fig. 2 ist eine Entgasungsvorrichtung im Schnitt dargestellt, mit der sich das Verfahren durchführen lässt. Dabei enthält diese Zeichnung nur die wesentlichen Funktionsteile ohne konstruktive Details. Die Vorrichtung weist eine im Wesentlichen rotationssymmetrische Kammer 5 auf, die bei dem gezeigten Beispiel eine zylindrische Innenwand 2 enthält und mit einem Boden 6 nach unten abgeschlossen ist. Der Boden 6 verhindert den Austritt der in der Kammer geführten Flüssigkeit nach unten. Die Kammer kann innen einen Durchmesser D zwischen 300 und 1000 mm und eine axiale Erstreckung H zwischen 100 mm und 6000 mm aufweisen. Konzentrisch mit der zylindrischen Innenwand 2 ist ein Rotor 3 angeordnet, dessen hydraulisch wirksamer Teil, insbesondere die Rotorflügel 4 sich innerhalb der Kammer befindet. Der rechte Rotorflügel 4 ist nur teilweise gezeichnet. Der Rotor 3 wird durch einen Antrieb 14 in Rotation versetzt, vorzugsweise so, dass er außen mit einer Umfangsgeschwindigkeit zwischen 8 und 25 m/s umläuft. Die mittlere Verweilzeit des Flotationsschaumes 1 in der Kammer 5 wird mit Vorteil auf 5 bis 10 Sekunden eingestellt.

Bei der bevorzugten Gebrauchslage der Vorrichtung mit vertikal stehender Mittelachse 11 tritt der zu entgasende Flotationsschaum 1 von oben in den zentralen Bereich der Kammer 5 ein. Er wird von den Rotorflügeln 4 erfasst und in Rotation versetzt, so dass er sich als Flüssigkeitsring 13 (in Fig. 2 gezeichnet) an die Innenwand 2 des Behälters anlegt. In Folge der Zentrifugalkräfte wandern die Gase, insbesondere die Luft, radial nach innen, was zur gewünschten Entgasung des Flotationsschaumes 1 führt. Im Allgemeinen können die Gase nach oben entweichen, wobei eine Entgasungsleitung 7, die sich im Zentrum befindet, hilfreich ist, weil dadurch eine unnötige Rückvermischung der ausgetretenen Gase mit dem zufließenden Flotationsschaum 1 vermieden wird. Die Entgasungsleitung 7 mündet hier innerhalb der Flotationsanlage, so dass die Gase direkt von der Mischvorrichtung 12 wieder angesaugt werden. Selbstverständlich können die Gase auch abgesaugt werden, z.B. durch einen hohlen Rotor. In der Wand der Kammer 5 befindet sich hier eine Abzugsöffnung 8, die in den Abzugsstutzen 9 mündet. Auf diese Weise kann der in einer Flüssigkeitsschicht an der Innenwand 2 rotierende Flotationsschaum aus der Kammer 5 abgeführt werden, so dass er als entgaster Flotationsschaum 1' den Abzugsstutzen 9 passiert. Die Umfangsgeschwindigkeit des Rotors 3 wird sinnvollerweise so gewählt, dass die Zentrifugalkräfte ausreichen, um einen Flüssigkeitsring an der Innenwand 2 zu bilden. In Abhängigkeit vom Durchmesser der Innenwand 2 sind das etwa 8 bis 25 m/s.

In Fig. 3 ist ein Anlagenschema gezeigt, um eine mögliche vorteilhafte Ausführungsform des erfindungsgemäßen Verfahrens zu beschreiben. Die Anlage dient dazu, um die in einer Stoffaufbereitung 26 gebildete Papierfasersuspension S durch eine zweistufige Flotationsanlage zu reinigen, insbesondere um Druckfarbenpartikel und klebende Teilchen (stickies) zu entfernen. Dazu werden auf der rechten Seite der Zeichnung fünf und auf der linken Seite drei Flotationsvorrichtungen dargestellt, was selbstverständlich nur als Beispiel zu verstehen ist. Die rechts dargestellten fünf Flotationsvorrichtungen 10, 10', 10", 10'", 10"" gehören zur ersten Flotationsstufe, d.h. dass der dort in der letzten Flotationsvorrichtung 10"" gebildete Gutstoff A die Qualität hat, die mit der Flotationsanlage erzeugt wird. Diese Flotationsvorrichtungen sind in Reihe geschaltet, wozu z.B. in der Flotationsvorrichtung 10 ein Gutstoff A 10 gebildet, über eine Pumpe 19 in die folgende Flotationsvorrichtung 10' geführt wird und dort in einer Mischvorrichtung 12' mit der in der Flotationsvorrichtung 10' frei gewordenen Luft vermischt wird. Solche Vorgänge sind in der Flotationstechnik bekannt und werden deshalb hier nicht weiter beschrieben. Entsprechend wird auch in den stromabwärts liegenden Flotationsvorrichtungen 10" und 10'" verfahren, wozu jeweils die Pumpen 19', 19", 19"' sowie die Mischvorrichtungen 12", 12"', 12"" dienen. In den Flotationsvorrichtungen wird ein Flotationsschaum 1 gebildet und über eine gemeinsame Schaumsammelrinne 16 (nur schematisch dargestellt) zusammen gefasst. Der Flotationsschaum 1 kann dann über ein Fallrohr 17 in die Entgasungsvorrichtung 18 abfließen. Diese Entgasungsvorrichtung 18 kann bevorzugt so ausgestaltet sein, wie es in Fig. 1 und 2 schon gezeigt ist. Sie enthält also eine Kammer 5 und einen mit Antrieb 14 versehenen Rotor 3. Der in der Kammer teilentgaste Flotationsschaum 1' wird über eine Pumpe 21 in die erste Flotationsvorrichtung 22 der zweiten Flotationsstufe eingepumpt. Die verwendeten Pumpen können als Kreiselpumpen, z. Radial- oder Halbaxial-Pumpen, ausgeführt sein und geodätisch auf derselben Ebene stehen wie die Flotationsanlagen, was im Vergleich zum Stand der Technik, so solche Aggregate zumeist geodätisch tiefer angeordnet wurden, von Vorteil ist. Darüber hinaus kann der bisher zur Entgasung übliche Schaumsammeltank entfallen.

Die Flotation der zweiten Stufe wird in den Flotationsvorrichtungen 22, 22' und 22" ähnlich durchgeführt, wie in den Flotationsvorrichtungen der ersten Stufe. In der zweiten Flotationsstufe wird ein Flotationsschaum 1" gebildet, der hier in einer weiteren Entgasungsvorrichtung 18' entgast wird, damit er in einer Rejektaufbereitung 25 leichter weiterbehandelt und als Rejekt R 25 entsorgt werden kann. Ob auch hier die Verwendung einer Entgasungsvorrichtung, insbesondere gemäß Fig. 1 und 2 sinnvoll ist, entscheidet sich aus der Zusammensetzung des Flotationsschaumes 1 " sowie den Anforderungen der Rejektaufbereitung 25.

Es gibt durchaus Fälle, bei denen auch eine dritte Flotationsstufe für den in der zweiten Flotationsstufe gebildeten Flotationsschaum 1" eingesetzt wird. Die Überlegungen gelten dann entsprechend.

Das Verfahren kann so ausgestaltet werden, dass der in der Entgasungsvorrichtung 18 gebildete teilentgaste Flotationsschaum 1' mit Teilen der in der zweiten Flotationsstufe gebildeten Gutstoffe A 22, A 22', A 22" vermischt wird. Das hat den Vorteil, dass die Flotationsvorrichtung 22 leichter und effektiver zu betreiben ist. Die Menge der zugemischten Gutstoffe richtet sich dabei nach der Menge des in der ersten Flotationsstufe anfallenden Flotationsschaumes 1' sowie den Anforderungen der Flotationsvorrichtungen 22, 22', 22" der zweiten Flotationsstufe. Vorzugsweise wird der Gutstoff A22 der ersten Flotationsvorrichtung 22 verwendet. Wenn das nicht ausreicht, kann auch Gutstoff aus den weiteren Flotationsvorrichtungen zur Verdünnung eingesetzt werden. Das System ist in sich hydraulisch stabil und gleicht Schwankungen im Schaumüberlauf der stromaufwärtigen Flotationsstufe automatisch durch Anpassung der Volumenströme aus den Gutstoffausläufen der stromabwärtigen Flotationsstufe aus. Im Bedarfsfall lässt sich diese Anpassung der Volumenströme auch in das Prozessleitsystem PLS integrieren.

## Patentansprüche

1. Verfahren zur Entfernung von Störstoffen aus einer wässrigen Papierfaserstoffsuspension (S) durch Flotation,
wobei der dabei gebildete Flotationsschaum (1, 1") in einer mit mindestens einem angetriebenen Rotor versehenen Entgasungsvorrichtung (18, 18') in Rotation versetzt, aus ihm ein Teil der enthaltenen Gase, insbesondere der Luft, entfernt wird und der Flotationsschaum (1) in der Entgasungsvorrichtung (18, 18') als rotierender Flüssigkeitsring (13) an eine den Rotor (3) radial umgebende geschlossene Wandung (2) angelegt wird, **dadurch gekennzeichnet dass**
dass die Abführung des teilentgasten Flotationsschaumes (1', 1'") aus dem Flüssigkeitsring (13) heraus durch mindestens eine Abzugsöffnung (8) in der Wandung (2) vorgenommen wird und eine radiale Mindestdicke (B) des Flüssigkeitringes (13) von mindestens 30 mm eingestellt wird.

2. Verfahren nach Anspruch 1,
**dadurch gekennzeichnet,**
**dass** der Flotationsschaum (1, 1") ohne Pumpe in die Entgasungsvorrichtung (18, 18') transportiert wird.

3. Verfahren nach Anspruch 1 oder 2,
**dadurch gekennzeichnet,**
**dass** die Umfangsgeschindigkeit des Rotors (3) am radial äußersten Teil zwischen 8 m/s und 25 m/s beträgt.

4. Verfahren nach Anspruch 1, 2 oder 3,
**dadurch gekennzeichnet,**
**dass** eine radiale Mindestdicke (B) des Flüssigkeitsrings (13) zwischen 50 und 100 mm eingestellt wird.

5. Verfahren nach Anspruch 1, 2, 3 oder 4,
**dadurch gekennzeichnet,**
**dass** die Mittelachse (11) des rotierenden Flüssigkeitsrings (13) senkrecht steht.

6. Verfahren nach Anspruch 5,
**dadurch gekennzeichnet,**
**dass** der Flotationsschaum (1, 1") von oben in das Zentrum der Entgasungsvorrichtung (18, 18') hineinfließt.

7. Verfahren nach einem der voran stehenden Ansprüche,
**dadurch gekennzeichnet,**
**dass** die aus dem Flotationsschaum (1, 1 ") ausgeschiedenen Gase durch eine zentrale Entgasungsleitung (7) abgeführt werden.

8. Verfahren nach einem der voran stehenden Ansprüche,
**dadurch gekennzeichnet,**
**dass** der teilentgaste Flotatikonsschaum (1', 1'") tangential aus der Entgasungsvorrichtung (18, 18') abgeführt wird.

9. Verfahren nach einem der voran stehenden Ansprüche,
**dadurch gekennzeichnet,**
**dass** aus der Entgasungsvorrichtung (18, 18') ein teilentgaster Flotationsschaum (1', 1"') mit einem Restgasgehalt unter 10 % abgeführt wird.

10. Verfahren nach einem der voran stehenden Ansprüche,
**dadurch gekennzeichnet,**
**dass** die mittlere Verweilzeit des Flotationsschaumes in der Entgasungsvorrichtung (18, 18') zwischen 3 und 20 s, vorzugweise 5 bis 10 s, eingestellt wird.

11. Verfahren nach einem der voran stehenden Ansprüche,
**dadurch gekennzeichnet,**
**dass** der teilentgaste Flotationsschaum (1', 1"') durch zumindest eine Pumpe (21) weiter transportiert wird, die als Kreiselpumpe ausgebildet ist.

12. Verfahren nach Anspruch 11,
**dadurch gekennzeichnet,**
**dass** die Pumpe (21) auf dem geodätischen Niveau der Flotationsvorrichtungen (10, 10', 10", 10'", 22, 22', 22") steht.

13. Verfahren nach einem der voran stehenden Ansprüche,
**dadurch gekennzeichnet,**
**dass** mindestens zwei Flotationsstufen verwendet werden, welche so geschaltet sind, dass der Flotationsschaum einer Flotationsstufe in den Zulauf einer anderen Flotationsstufe gepumpt wird.

14. Verfahren nach Anspruch 13,
**dadurch gekennzeichnet,**
**dass** der teilentgaste Flotationsschaum (1', 1"') der stromaufwärtigen Flotationsstufe ohne Zwischenschaltung eines Schaumbehälters in die stromabwärts folgende Flotationsstufe gefördert wird.

15. Verfahren nach Anspruch 13 oder 14,
**dadurch gekennzeichnet,**
**dass** der in der Entgasungsvorrichtung (18, 18˙) erzeugte Druckaufbau genutzt wird, um den teilentgasten Flotationsschaum (1', 1"') ohne weitere Pumpe zu fördern.

16. Verfahren nach Anspruch 13, 14 oder 15,
**dadurch gekennzeichnet,**
**dass** ein Teil des Gutstoffes (A22, A22'. A22") einer stromabwärtigen Flotationsstufe mit dem dieser Flotationsstufe zugeführten teilentgasten Flotationsschaum (1', 1"') vermischt wird.

17. Verfahren nach Anspruch 16,
**dadurch gekennzeichnet,**
**dass** hierzu zumindest teilweise der Gutstoff (A22) der ersten Flotationsvorrichtung (22) dieser Flotationsstufe verwendet wird.

18. Verfahren nach Anspruch 16 oder 17,
**dadurch gekennzeichnet,**
**dass** hierzu zumindest teilweise der Gutstoff (A22) der letzten Flotationsvorrichtung (22") dieser Flotationsstufe verwendet wird.

## Claims

1. Method for removing unwanted matter from an aqueous paper fibre suspension (S) by means of flotation,
wherein the flotation foam (1, 1'') formed in the process is set rotating in a degassing device (18, 18') provided with at least one driven rotor, some of the gases contained, in particular the air, are removed therefrom and the flotation foam (1) in the degassing device (18, 18') is applied as a rotating liquid ring (13) to a closed wall (2) surrounding the rotor (3) radially,
**characterized in that**
the extraction of the partially degassed flotation foam (1', 1''') from the liquid ring (13) is performed through at least one extraction opening (8) in the wall (2), and a radial minimum thickness (B) of the liquid ring (13) of at least 30 mm is established.

2. Method according to Claim 1,
**characterized in that**
the flotation foam (1, 1'') is transported into the degassing device (18, 18') without any pump.

3. Method according to Claim 1 or 2,
**characterized in that**
the circumferential speed of the rotor (3) is between 8 m/s and 25 m/s at the radially outermost part.

4. Method according to Claim 1, 2 or 3,
**characterized in that**
a radial minimum thickness (B) of the liquid ring (13) between 50 and 100 mm is established.

5. Method according to Claim 1, 2, 3 or 4,
**characterized in that**
the central axis (11) of the rotating liquid ring (13) is vertical.

6. Method according to Claim 5,
**characterized in that**
the flotation foam (1, 1'') flows into the centre of the degassing device (18, 18') from above.

7. Method according to one of the preceding claims,
**characterized in that**
the gases separated out from the flotation foam (1, 1'') are extracted through a central degassing line (7).

8. Method according to one of the preceding claims,
**characterized in that**
the partially degassed flotation foam (1', 1''') is extracted tangentially from the degassing device (18, 18').

9. Method according to one of the preceding claims,
**characterized in that**
a partially degassed flotation foam (1', 1''') having a residual gas content below 10% is extracted from the degassing device (18, 18').

10. Method according to one of the preceding claims,
**characterized in that**
the average residence time of the flotation foam in the degassing device (18, 18') is set between 3 and 20 seconds, preferably 5 to 10 seconds.

11. Method according to one of the preceding claims,
**characterized in that**
the partially degassed flotation foam (1', 1''') is transported further by at least one pump (21), which is formed as a centrifugal pump.

12. Method according to Claim 11,
**characterized in that**
the pump (21) is at the geodetic level of the flotation devices (10, 10', 10'', 10''', 22, 22', 22'').

13. Method according to one of the preceding claims,
**characterized in that**
use is made of at least two flotation stages, which are connected in such a way that the flotation foam from one flotation stage is pumped into the inlet of another flotation stage.

14. Method according to Claim 13,
**characterized in that**
the partially degassed flotation foam (1', 1''') from the upstream flotation stage is conveyed into the flotation stage following downstream without the interposition of a foam container.

15. Method according to Claim 13 or 14,
**characterized in that**
the build-up of pressure generated in the degassing device (18, 18') is used to convey the partially degassed flotation foam (1', 1''') without a further pump.

16. Method according to Claim 13, 14 or 15,
**characterized in that**
some of the accepts (A22, A22', A22'') from an upstream flotation stage are mixed with the partially degassed flotation foam (1', 1''') fed to this flotation stage.

17. Method according to Claim 16,
**characterized in that**
at least to some extent, the accepts (A22) from the first flotation device (22) of this flotation stage are used for this purpose.

18. Method according to Claim 16 or 17,
**characterized in that**
at least to some extent, the accepts (A22) from the last flotation device (22'') of this flotation stage are used for this purpose.

## Revendications

1. Procédé d'élimination de substances gênantes d'une suspension aqueuse de fibres de papier (S) par flottation,
dans lequel la mousse de flottation (1, 1'') ainsi formée est mise en rotation dans un dispositif de dégazage (18, 18') prévu avec au moins un rotor entraîné, une partie des gaz, notamment de l'air, contenus dans celle-ci est éliminée et la mousse de flottation (1) est appliquée dans le dispositif de dégazage (18, 18') sous forme d'anneau liquide en rotation (13) contre une paroi (2) fermée entourant radialement le rotor (3), **caractérisé en ce que**
l'évacuation de la mousse de flottation partiellement dégazée (1', 1''') hors de l'anneau liquide (13) est effectuée par au moins une ouverture d'extraction (8) dans la paroi (2) et une épaisseur minimale radiale (B) de l'anneau liquide (13) d'au moins 30 mm est ajustée.

2. Procédé selon la revendication 1,
**caractérisé en ce que**
la mousse de flottation (1, 1'') est transportée sans pompe dans le dispositif de dégazage (18, 18').

3. Procédé selon la revendication 1 ou 2,
**caractérisé en ce que**
la vitesse périphérique du rotor (3) au niveau de la partie la plus externe radialement est comprise entre 8 m/s et 25 m/s.

4. Procédé selon la revendication 1, 2 ou 3,
**caractérisé en ce**
**qu'**une épaisseur minimale radiale (B) de l'anneau liquide (13) est ajustée entre 50 et 100 mm.

5. Procédé selon la revendication 1, 2, 3 ou 4,
**caractérisé en ce que**
l'axe médian (11) de l'anneau liquide en rotation (13) est vertical.

6. Procédé selon la revendication 5,
**caractérisé en ce que**
la mousse de flottation (1, 1") s'écoule depuis le haut dans le centre du dispositif de dégazage (18, 18').

7. Procédé selon l'une quelconque des revendications précédentes,
**caractérisé en ce que**
les gaz expulsés de la mousse de flottation (1, 1'') sont évacués par une conduite de dégazage centrale (7).

8. Procédé selon l'une quelconque des revendications précédentes,
**caractérisé en ce que**
la mousse de flottation partiellement dégazée (1', 1''')est évacuée tangentiellement hors du dispositif de dégazage (18, 18').

9. Procédé selon l'une quelconque des revendications précédentes,
**caractérisé en ce**
**qu'**une mousse de flottation partiellement dégazée (1', 1''') est évacuée du dispositif de dégazage (18, 18') avec une teneur en gaz résiduel inférieure à 10 %.

10. Procédé selon l'une quelconque des revendications précédentes,
**caractérisé en ce que**
le temps de résidence moyen de la mousse de flottation dans le dispositif de dégazage (18, 18') est ajusté entre 3 et 20 s, de préférence entre 5 et 10 s.

11. Procédé selon l'une quelconque des revendications précédentes,
**caractérisé en ce que**
la mousse de flottation (1', 1''') partiellement dégazée est encore transportée par au moins une pompe (21) qui est réalisée sous forme de pompe centrifuge.

12. Procédé selon la revendication 11,
**caractérisé en ce que**
la pompe (21) est au niveau géodésique des dispositifs de flottation (10, 10', 10'', 10''', 22, 22', 22'').

13. Procédé selon l'une quelconque des revendications précédentes,
**caractérisé en ce**
**qu'**au moins deux étages de flottation sont utilisés, lesquels sont connectés de telle sorte que la mousse de flottation d'un étage de flottation soit pompée dans l'alimentation d'un autre étage de flottation.

14. Procédé selon la revendication 13,
**caractérisé en ce que**
la mousse de flottation partiellement dégazée (1', 1''') de l'étage de flottation amont est refoulée sans interposition d'un récipient de mousse dans l'étage de flottation suivant en aval.

15. Procédé selon la revendication 13 ou 14,
**caractérisé en ce que**
l'augmentation de pression produite dans le dispositif de dégazage (18, 18') est utilisée pour refouler la mousse de flottation partiellement dégazée (1', 1''') sans pompe supplémentaire.

16. Procédé selon la revendication 13, 14 ou 15,
**caractérisé en ce**
**qu'**une partie de la fraction acceptée (A22, A22', A22'') d'un étage de flottation aval est mélangée à la mousse de flottation partiellement dégazée (1', 1''') acheminée à cet étage de flottation.

17. Procédé selon la revendication 16,
**caractérisé en ce**
**qu'**à cet effet la fraction acceptée (A22) du premier dispositif de flottation (22) de cet étage de flottation est utilisée au moins en partie.

18. Procédé selon la revendication 16 ou 17,
**caractérisé en ce**
**qu'**à cet effet la fraction acceptée (A22) du dernier dispositif de flottation (22'') de cet étage de flottation est utilisée au moins en partie.
